# EUROPEAN PATENT SPECIFICATION

(11) **EP 2 935 835 B1**
(45) Date of publication and mention of the grant of the patent: **09.10.2019**
(21) Application number: 13874584.9
(22) Date of filing: 17.12.2013
(51) Int. Cl.: F02C 7/12, F02C 7/18, F01D 25/12, F02C 7/04, B64D 33/02, B64D 33/08

(54) **THERMAL MANAGEMENT FOR GAS TURBINE ENGINE**
WÄRMEMANAGEMENT FÜR EINEN GASTURBINENMOTOR
GESTION THERMIQUE POUR MOTEUR À TURBINE À GAZ

(30) Priority: 19.12.2012 US 201213719706
(43) Date of publication of application: 28.10.2015
(73) Proprietor: United Technologies Corporation, Farmington, CT 06032 (US)
(72) Inventor: JONES, Anthony C., San Diego, California 92124 (US); TRAVELBEE, Charles Brian, San Diego, California 92123 (US); LYDON, Patrick M., San Marcos, California 92069 (US); ALEXANDER, Eric J., San Diego, California 92119 (US); THAYALAKHANDAN, Nagamany, San Diego, California 92129 (US)
(74) Representative: Dehns
(86) International application number: PCT/US2013/075623
(87) International publication number: WO 2014/123626

(56) References cited:
- WO-A1-03/037715
- WO-A1-2014/092750
- GB-A- 2 152 147
- US-A- 3 032 977
- US-A- 5 056 307
- US-A- 5 070 690
- US-A- 5 623 823
- US-A1- 2009 214 331
- US-A1- 2009 214 331
- US-B2- 7 475 545
- US-B2- 7 475 545

## Description

### BACKGROUND OF THE INVENTION

This application relates to a miniature gas turbine engine, which is used to power an aircraft, such as a drone or ballistic missile.

Miniature gas turbine engines are utilized to power aircraft such as unmanned drones, or ballistic missiles. These gas turbine engines generate very high heat, and travel at a high speed.

An air scoop delivers inlet air directly into a compressor in the miniature gas turbine engine.

Various components on miniature gas turbine engines are subject to undue amounts of heat.

A prior art gas turbine engine having the features of the preamble to claim 1 is disclosed in US 2009/0214331 A. Other prior art gas turbine engines are disclosed in US 3,032,977, WO 03/037715, US 7,475,545 and GB 2,152,147. Another gas turbine engine is disclosed in WO 2014/092750, which is prior art under Article 54(3) EPC.

### SUMMARY OF THE INVENTION

From one aspect, the present invention provides a gas turbine engine in accordance with claim 1.

In an embodiment of the above, the gas turbine engine includes a compressor that compresses air and delivers it into a combustion section where it is mixed with fuel and ignited. The products of the combustion pass downstream over a turbine rotor driving the turbine rotor to rotate. The gases downstream of the turbine rotor pass outwardly of a nozzle to provide propulsion for the vehicle.

In another embodiment according to any of the previous embodiments, the cooling air exits at a downstream end adjacent the nozzle.

From another aspect, the present invention provides a vehicle in accordance with claim 4.

In an embodiment of the above, an outer casing for the vehicle is spaced radially away from the outer casing of the gas turbine engine. The cooling airflow passes between an inner surface of the vehicle outer casing and the outer casing of the gas turbine engine.

In another embodiment according to any of the previous embodiments, the vehicle is an unmanned drone.

In another embodiment according to any of the previous embodiments, the vehicle carries a ballistic missile.

In another embodiment according to any of the previous embodiments, the compressor compresses air and delivers it into a combustion section where it is mixed with fuel and ignited. Products of the combustion pass downstream over a turbine rotor, and drive the turbine rotor to rotate. The gases downstream of the turbine rotor pass outwardly of a nozzle to provide propulsion for the vehicle.

In another embodiment according to any of the previous embodiments, the cooling air exits adjacent the nozzle.

These and other features may be best understood from the following drawings and specification.

### BRIEF DESCRIPTION OF THE DRAWINGS

Figure 1 schematically shows an aircraft including a miniature gas turbine engine.
Figure 2 shows airflow across the miniature gas turbine engine.

### DETAILED DESCRIPTION

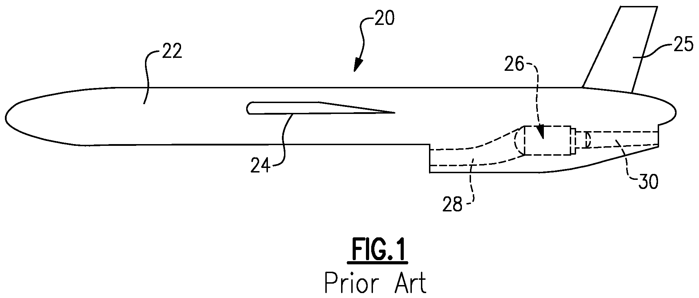

Figure 1 shows miniature gas turbine engine 26 associated with a vehicle 20. Vehicle 20 includes a main body 22, and aerodynamic surfaces 24 and 25. The vehicle 20 may be utilized as an aircraft drone, or may be utilized as a ballistic missile. Other applications may come within the scope of this application.

An air inlet duct 28 supplies air into the gas turbine engine 26. The gas turbine engine operates to compress the air, mix the air with fuel, combust it, and pass products of that combustion across at least one turbine rotor. The turbine rotor is driven to rotate to drive a compressor. The products of the combustion pass outwardly of a nozzle 30 downstream of the turbine section, and provide propulsion for the vehicle 20.

In accordance with the present invention, the term "miniature gas turbine engine" generally relates to gas turbine engines which have an axial length of less than 15 inches (38.1 centimeters), and which provide 180 foot pounds (244 Nm) of thrust or less.

In Figure 1, the inlet duct 28 delivers airflow into an inlet for a compressor in the miniature gas turbine engine 26.

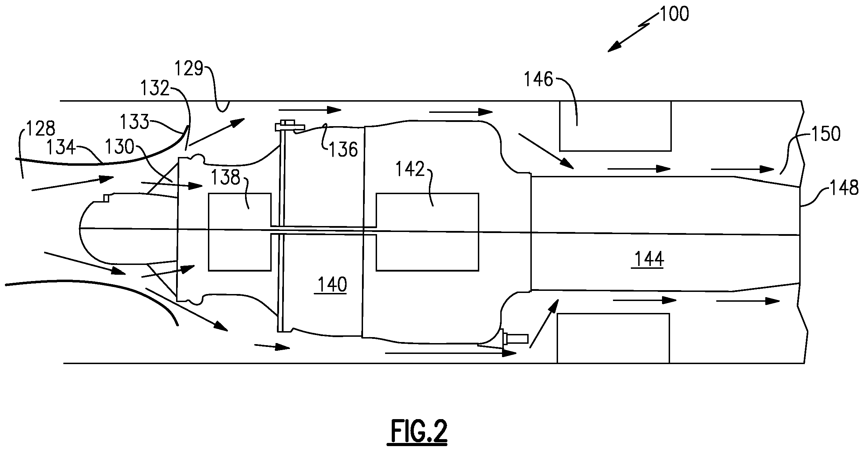

Figure 2 shows an embodiment of a miniature gas turbine engine 100. In miniature gas turbine engine 100, an inlet 128 delivers air into a core inlet 130 delivering the air into a compressor rotor 138. That air is compressed in the compressor rotor 138, mixed with fuel and ignited in a combustion section 140 and products of that combustion pass over at least one turbine rotor 142. The turbine rotor 142 drives a compressor rotor 138.

An outlet nozzle 148 delivers the products of the combustion downstream of the turbine rotor outwardly to provide thrust for a vehicle such as vehicle 20.

An inlet duct 134 curves outwardly at a downstream end 133, and delivers cooling air 132 into a gap between an outer casing 136 of the gas turbine engine, and an inner surface of a casing 129 of the vehicle 20 of FIG. 1. This airflow passes downstream outwardly at the nozzle end 150. This airflow passes over one or more components 146 to cool those components. The components 146 are at least one of actuators or electronic controls.

By utilizing a portion of the air entering the inlet 128, the gas turbine engine 100 simply provides cooling to the components.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (100) comprising an inlet duct (128), said inlet duct (128) configured to communicate with an inlet (130) to a compressor (138), wherein:
the axial length of the gas turbine engine (100) is less than 38.1 centimeters (15 inches), and
said gas turbine engine (100) provides 244 Nm (180 foot pounds) thrust or less,
**characterized in that**
said inlet duct (128) is further configured to communicate cooling air (132) outwardly of an outer casing (136) of the gas turbine engine (100), and to pass the air (132) along an axial length of the gas turbine engine (100) to cool a component (146) associated with said gas turbine engine (100); and
said inlet duct (128) has a manifold (134) that curves radially outwardly at a downstream end (133) to allow the air (132) to flow along the outer casing (136) of the gas turbine engine (100), and **in that**
said component (146) includes at least one of an actuator or an electronic control.

2. The gas turbine engine as set forth in any preceding claim, wherein said gas turbine engine (100) includes the compressor (138) compressing air (132) and delivering it into a combustion section (140) where it is mixed with fuel and ignited, the products of the combustion passing downstream over a turbine rotor (142) driving the turbine rotor (142) to rotate, the gases downstream of the turbine rotor (142) passing outwardly of a nozzle (148) to provide propulsion for a vehicle.

3. The gas turbine engine as set forth in claim 2, wherein the cooling air (132) exits at a downstream end adjacent the nozzle (148).

4. A vehicle comprising:
a body having at least one aerodynamic surface; and
the gas turbine engine (100) of claim 1.

5. The vehicle as set forth in claim 4, wherein an outer casing (129) for the vehicle is spaced radially away from the outer casing (136) of the gas turbine engine (100), and the cooling airflow (132) passes between an inner surface of the vehicle outer casing (129) and the outer casing (136) of the gas turbine engine (100).

6. The vehicle as set forth in claim 4 or 5, wherein said vehicle is an unmanned drone.

7. The vehicle as set forth in claims 4, 5 or 6, wherein the vehicle carries a ballistic missile.

8. The vehicle as set forth in any of claims 4 to 7, wherein said compressor (138) compresses air and delivers it into a combustion section (140) where it is mixed with fuel and ignited, and products of the combustion pass downstream over a turbine rotor (142), driving the turbine rotor (142) to rotate, and the gases downstream of the turbine rotor (142) pass outwardly of a nozzle (148) to provide propulsion for the vehicle.

9. The vehicle as set forth in claim 8, wherein the cooling air (132) exits adjacent the nozzle (148).

## Patentansprüche

1. Gasturbinenmotor (100), umfassend einen Einlasskanal (128), wobei der Einlasskanal (128) konfiguriert ist, um mit einem Einlass (130) zu einem Verdichter (138) zu kommunizieren, wobei die axiale Länge des Gasturbinenmotors (100) weniger als 38,1 Zentimeter (15 Zoll) ist, und der Gasturbinenmotor (100) 244 Nm (180 Foot-pound) Schub oder weniger bereitstellt, **dadurch gekennzeichnet, dass**
der Einlasskanal (128) ferner konfiguriert ist, um Kühlluft (132) außerhalb eines Außengehäuses (136) des Gasturbinenmotors (100) zu kommunizieren, und um die Luft (132) entlang einer axialen Länge des Gasturbinenmotors (100) zu leiten, um eine Komponente (146) zu kühlen, die mit dem Gasturbinenmotor (100) verbunden ist; und
der Einlasskanal (128) einen Verteiler (134) aufweist, der an einem stromabwärtigen Ende (133) radial nach außen gebogen ist, um zu ermöglichen, dass die Luft (132) entlang des Außengehäuses (136) des Gasturbinenmotors (100) strömt,
und dass die Komponente (146) zumindest eines von einem Aktor oder einer elektronischen Steuerung beinhaltet.

2. Gasturbinenmotor nach einem vorhergehenden Anspruch, wobei der Gasturbinenmotor (100) den Verdichter (138) beinhaltet, der Luft (132) verdichtet und sie in einen Brennkammerabschnitt (140) abgibt, wo sie mit Kraftstoff vermischt und gezündet wird, wobei die Produkte der Verbrennung stromabwärts über einen Turbinenrotor (142) geleitet werden, wodurch der Turbinenrotor (142) angetrieben wird, sodass er sich dreht, wobei die Gase stromabwärts des Turbinenrotors (142) außerhalb einer Düse (148) geleitet werden, um Antrieb für ein Fahrzeug bereitzustellen.

3. Gasturbinenmotor nach Anspruch 2, wobei die Kühlluft (132) an einem stromabwärtigen Ende benachbart zu der Düse (148) austritt.

4. Fahrzeug, umfassend:
eine Karosserie, die zumindest eine aerodynamische Fläche aufweist; und
den Gasturbinenmotor (100) nach Anspruch 1.

5. Fahrzeug nach Anspruch 4, wobei ein Außengehäuse (129) für das Fahrzeug radial weg von dem Außengehäuse (136) des Gasturbinenmotors (100) beabstandet ist und der Kühlluftstrom (132) zwischen einer Innenfläche des Fahrzeugaußengehäuses (129) und dem Außengehäuse (136) des Gasturbinenmotors (100) geleitet wird.

6. Fahrzeug nach Anspruch 4 oder 5, wobei das Fahrzeug eine unbemannte Drohne ist.

7. Fahrzeug nach Anspruch 4, 5 oder 6, wobei das Fahrzeug eine ballistische Rakete trägt.

8. Fahrzeug nach einem der Ansprüche 4 bis 7, wobei der Verdichter (138) Luft verdichtet und sie in einen Brennkammerabschnitt (140) abgibt, wo sie mit Kraftstoff vermischt und gezündet wird, und Produkte der Verbrennung stromabwärts über einen Turbinenrotor (142) geleitet werden, wodurch der Turbinenrotor (142) angetrieben wird, sodass er sich dreht, und die Gase stromabwärts des Turbinenrotors (142) außerhalb einer Düse (148) verlaufen, um Antrieb für das Fahrzeug bereitzustellen.

9. Fahrzeug nach Anspruch 8, wobei die Kühlluft (132) benachbart zu der Düse (148) austritt.

## Revendications

1. Moteur à turbine à gaz (100) comprenant un conduit d'admission (128), ledit conduit d'admission (128) étant configuré pour communiquer avec une admission (130) d'un compresseur (138), dans lequel :
la longueur axiale du moteur à turbine à gaz (100) est inférieure à 38,1 centimètres (15 pouces), et
ledit moteur à turbine à gaz (100) fournit 244 Nm (180 pieds livres) de poussée ou moins,
**caractérisé en ce que**
ledit conduit d'admission (128) est en outre configuré pour communiquer de l'air de refroidissement (132) vers l'extérieur d'un carter externe (136) du moteur à turbine à gaz (100) et pour faire passer l'air (132) le long d'une longueur axiale du moteur à turbine à gaz (100) pour refroidir un composant (146) associé audit moteur à turbine à gaz (100) ; et
ledit conduit d'admission (128) possède un collecteur (134) qui est incurvé radialement vers l'extérieur à une extrémité aval (133) pour permettre à l'air (132) de s'écouler le long du carter externe (136) du moteur à turbine à gaz (100), et **en ce que**
ledit composant (146) inclut au moins l'un d'un actionneur ou d'une commande électronique.

2. Moteur à turbine à gaz selon une quelconque revendication précédente, dans lequel ledit moteur à turbine à gaz (100) inclut le compresseur (138) comprimant de l'air (132) et le distribuant dans une section de combustion (140) où il est mélangé avec du carburant et enflammé, les produits de la combustion passant en aval sur un rotor de turbine (142) en entraînant le rotor de turbine (142) en rotation, les gaz en aval du rotor de turbine (142) passant vers l'extérieur d'une buse (148) pour fournir une propulsion pour un véhicule.

3. Moteur à turbine à gaz selon la revendication 2, dans lequel l'air de refroidissement (132) sort à une extrémité aval adjacente à la buse (148).

4. Véhicule comprenant :
une carrosserie ayant au moins une surface aérodynamique ; et
le moteur à turbine à gaz (100) selon la revendication 1.

5. Véhicule selon la revendication 4, dans lequel un carter externe (129) pour le véhicule est espacé radialement du carter externe (136) du moteur à turbine à gaz (100), et l'écoulement d'air de refroidissement (132) passe entre une surface interne du carter externe de véhicule (129) et le carter externe (136) du moteur à turbine à gaz (100).

6. Véhicule selon la revendication 4 ou 5, dans lequel ledit véhicule est un drone sans pilote.

7. Véhicule selon les revendications 4, 5 ou 6, dans lequel le véhicule porte un missile balistique.

8. Véhicule selon l'une quelconque des revendications 4 à 7, dans lequel ledit compresseur (138) comprime de l'air et le distribue dans une section de combustion (140) où il est mélangé avec du carburant et enflammé, et les produits de la combustion passent en aval sur un rotor de turbine (142) en entraînant le rotor de turbine (142) en rotation, et les gaz en aval du rotor de turbine (142) passent vers l'extérieur d'une buse (148) pour fournir une propulsion pour le véhicule.

9. Véhicule selon la revendication 8, dans lequel l'air de refroidissement (132) sort de manière adjacente à la buse (148) .
